Europäisches Patentamt

**European Patent Office**

**Office européen des brevets**

(11) Veröffentlichungsnummer: **0 167 092**
**A2**

(12) **EUROPÄISCHE PATENTANMELDUNG**

(21) Anmeldenummer: 85107859.2

(22) Anmeldetag: 25.06.85

(51) Int. Cl.⁴: **B 27 C 5/10**
**B 23 Q 11/00**

(30) Priorität: 04.07.84 DE 3424500

(43) Veröffentlichungstag der Anmeldung:
08.01.86 Patentblatt 86/2

(84) Benannte Vertragsstaaten:
AT CH FR GB IT LI SE

(71) Anmelder: Festo KG
Ulmer Strasse 48
D-7300 Esslingen a.N.(DE)

(72) Erfinder: Maier, Peter, Dipl.-Ing. (FH)
Gerokstrasse 1
D-7311 Neidlingen(DE)

(72) Erfinder: Kutscher, Erwin
Hohenstaufenstrasse 24
D-7333 Ebersbach-Bünzwangen(DE)

(72) Erfinder: Knauer, Rolf
Bergstrasse 9
D-7300 Esslingen(DE)

(74) Vertreter: Magenbauer, Rudolf, Dipl.-Ing. et al,
Patentanwälte Dipl.-Ing. Rudolf Magenbauer Dipl.-Phys.
Dr. Otto Reimold Hölderlinweg 58
D-7300 Esslingen(DE)

(54) Spänefang für eine Oberfräse mit Staubabsaugung.

㉝ Der Spänefang hat die Gestalt einer Haube (19), die eine in Umfangsrichtung des Fräsers (2) verlaufende Wand (25) besitzt. Tangential von dem Fräser (2) fortgeschleuderte Späne werden von der Wand (25) auf eine schräg nach oben geneigte Rampe (28) gelenkt. Von dort gelangen die Späne in den Saugstrom einer Staubabsaugeinrichtung, der in der Umgebung des Fräsers (2) nach oben wirkt. Die Spänefanghaube (19) ist an der Unterseite eines L-profilförmigen Anschlags (6,7) in Laschen (20) verschieblich befestigt. Der Anschlag (6,7) besitzt oberhalb der Rampe (28) eine Durchtrittsöffnung (32) für die Späne.

EP 0 167 092 A2

./...

Fig. 2

12. Juni 1985
D 9325 E - s

0167092

Festo  K G , Ulmer Str. 48, D 7300 Esslingen.

---

Spänefang für eine Oberfräse mit Staubabsaugung

---

_ 1 _

Die Erfindung betrifft eine Oberfräse mit Staubabsaugung.

Eine derartige Oberfräse ist aus dem zum Stand der Technik fingierten, nicht vorveröffentlichten Patent P 33 14 419 bekannt. Sie besitzt einen Auflagetisch, der einen den Durchgriff eines Fräsers ermöglichenden Durchbruch aufweist. Der Auflagetisch ist ein zu dem Fräser hin offener Hohlkörper. Sein Innenraum kommuniziert mit einem Absaugstutzen, an den sich eine Absaugleitung anschließen läßt. Beim Fräsen anfallende Späne werden durch den Auflagetisch hindurch abgesaugt. Die Oberfräse kann mit einem Spänefang versehen sein, der eine Bedienungsperson vor Spänen schützt, die von dem Fräser tangential zur Seite fortgeschleudert werden.

Der bekannte Spänefang ist nicht optimal an die Staubabsaugeinrichtung angepaßt. Aufgefangene Späne gelangen nicht oder nur zu einem kleinen Teil in den Saugstrom. Es bleibt also ein Restanfall von Spänen, der von Hand beseitigt werden muß, was umständlich und bei laufendem Fräser sogar gefährlich sein kann. Das Ziel, ein Arbeiten in staubfreier Umgebung zu ermöglichen, wird noch nicht ganz erreicht.

Aufgabe der Erfindung ist es, in einer Oberfräse nach dem Oberbegriff des Anspruchs 1 die Staubabsaugeinrichtung zu verbessern.

Diese Aufgabe wird durch einen Spänefang gelöst, der die aufgefangenen Späne zu der Staubabsaugeinrichtung hin ableitet. Gemäß Anspruch 1 ist der Spänefang eine unterhalb des Auflagetischs befindliche Haube, die den Fräser mit einer sich mehr oder weniger in Umfangsrichtung erstreckenden Wand über einen Teil seines Umfangs umschließt. Unterhalb des Fräsers kommt ein Boden der Haube zu liegen, und von diesem Boden geht eine zu der Staubabsaugeinrichtung führende Rampe ab. Von dem Fräser wegfliegende Späne treffen mit einer tangentialen Geschwindigkeitskomponente auf die Wand, an der sie entlang auf die Rampe und über diese in den Saugstrom der Staubabsaugeinrichtung geleitet werden. Es werden so in effektiver Weise auch die Späne abgesaugt, die sich an dem Spänefang sammeln.

Bevorzugte Weiterbildungen der Erfindung sind in abhängigen Patentansprüchen gekennzeichnet.

Die Bauform gemäß Anspruch 3 ermöglicht es, die Spänefanghaube in einfacher und bequemer Weise an dem Auflagetisch zu befestigen und über den Fräser zu stellen.

Eine verschiebbare Führung der Spänefanghaube gemäß Anspruch 4 ermöglicht eine Anpassung an unterschiedliche Betriebsbedingungen, und insbesondere verschiedene Fräserstärken. Durch ein Justieren der Haube kann die Spanableitung optimiert werden.

Bei der in Anspruch 5 gekennzeichneten Befestigung der Spänefanghaube an einem Anschlag der Oberfräse macht man von einer vorhandenen Verschiebeführung in der Nachbarschaft des Fräsers Gebrauch. Diese Lösung ist daher konstruktiv besonders unaufwendig und kostengünstig zu realisieren. Eine Verschiebeführung der Haube auf dem Anschlag gemäß Anspruch 6 gestattet es, die Haube unabhängig von der jeweiligen Position des Anschlags zu justieren, um eine möglichst gute Spanableitung zu erzielen.

In der Weiterbildung nach Anspruch 8 bis 10 werden die Späne durch eine Durchtrittsöffnung in dem Anschlag hindurchgefördert. Es ist so sichergestellt, daß der Spanlauf unabhängig von der jeweiligen Arbeitsstellung des Anschlags in keiner Weise behindert wird.

Die Erfindung wird im folgenden anhand eines in den Zeichnungen dargestellten Ausführungsbeispiels näher erläutert. Es zeigen:

Fig. 1    die Seitenansicht einer Oberfräse mit Anschlag und Spänefanghaube;

Fig. 2    eine Draufsicht auf Anschlag und Spänefanghaube von unten, d. h. in Richtung II von Fig. 1;

Fig. 3    eine Seitenansicht der Spänefanghaube mit Blick in Richtung III von Fig. 2;

Fig. 4    eine Seitenansicht des Anschlags mit Blick in derselben Richtung III von Fig. 2;

Fig. 5    eine Draufsicht auf die Unterseite eines Auflagetischs der Oberfräse.

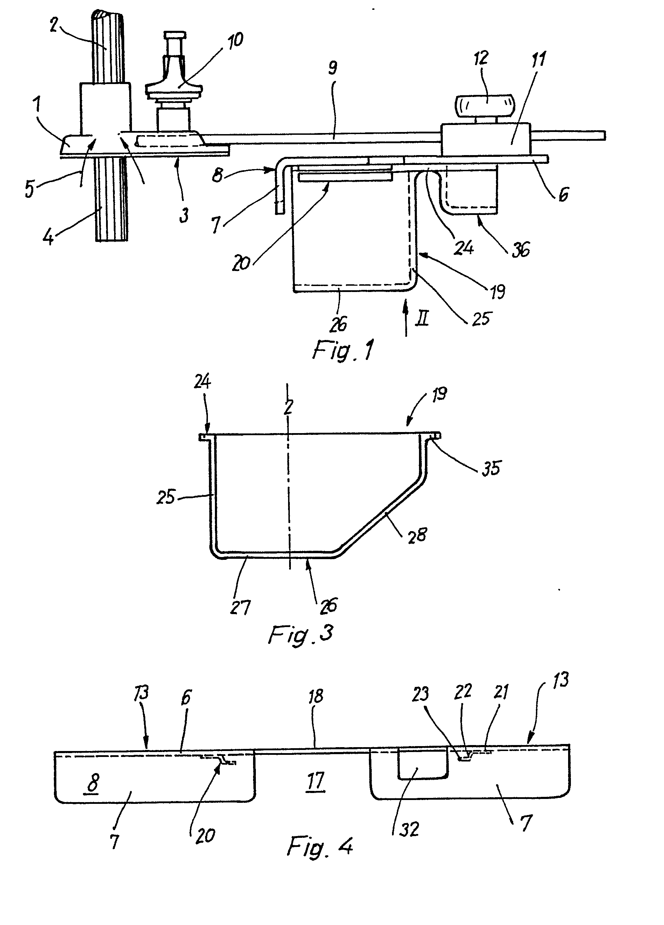

Bezugnehmend zunächst auf Fig. 1, ist schematisch der Abschnitt einer Oberfräse mit Staubabsaugung dargestellt.   Die Oberfräse besitzt einen Auflagetisch 1, der einen Durchbruch für den Durchgriff eines Fräsers 2 besitzt. Die Unterseite des Auflagetisches 1 bildet eine Laufsohle 3. Die Oberfräse wird auf ein nicht näher dargestelltes, zu bearbeitendes Werkstück aufgesetzt, wobei die Laufsohle 3 mit dem Werkstück in Anlage kommt. Der Fräser 2 steht mit einem Ende 4 über die Laufsohle 3 nach unten hin ab. Bei rotierendem Fräser 2 wird mit
diesem Ende 4 das Werkstück zerspant.

Die Oberfräse ist mit einer in der Abbildung nicht näher
dargestellten Einrichtung zur Staubabsaugung versehen.
Diese ist auf der Höhe des Auflagetischs 1 oder oberhalb
davon angeordnet, und sie erzeugt einen Saugstrom, durch
den im Bereich des Fräserendes 4 anfallende Späne abgesaugt werden. Beispielsweise kann der Auflagetisch 1
selbst ein zu dem Fräser 2 hin offener Hohlkörper sein,
dessen Inneres sich an eine Absaugleitung anschließen
läßt. Die Späne treten dann im Bereich der Durchbrechung
des Auflagetischs 1 über einen den Fräser 2 umgebenden
Ringraum in das Innere des Auflagetischs 1 und von dort
in die Absaugleitung ein. Die Staubabsaugung kann aber
auch über eine Anzahl gesonderter Kanäle erfolgen, die
in der Umgebung des Fräsers 2 an der Laufsohle 3 münden.
Wesentlich für das Verständnis der Erfindung ist, daß
in der Nachbarschaft des überstehenden Fräserendes 4
ein zu dem Auflagetisch 1 hin nach oben gerichteter
Saugstrom existiert, wie er durch die Pfeile 5 angedeutet
ist.

An dem Auflagetisch 1 ist ein zur Parallelführung der
Oberfräse dienender Anschlag befestigt. Der Anschlag
hat eine im wesentlichen L-profil-/förmigen Gestalt. Er besteht
aus einer Halteplatte 6,die sich parallel zu dem Auflagetisch 1 erstreckt, und einem von der Halteplatte 6 abgewinkelten L-Schenkel 7. Der L-Schenkel 7 ist dem Fräser
2 zugewandt. Seine Vorderseite bildet eine Anschlagfläche 8, die mit dem zu bearbeitenden Werkstück in
Anlage kommt. Der Anschlag läßt sich parallel zu dem
Auflagetisch 1 auf den Fräser 2 hin bzw. von diesem
weg verstellen. Hierzu sind zwei an dem Auflagetisch
1 befestigte Führungsstangen 9 vorgesehen. Die Führungsstangen 9 stehen in paralleler Anordnung seitlich von dem Auflagetisch 1 ab. Sie können in Längsrichtung verstellbar an dem Auflagetisch 1 befestigt sein, und insbesondere in Laufbohrungen des Auflagetischs 1 eintauchen und mit zugehörigen Knebeln 10 geklemmt werden. Mit der Halteplatte 6 sind zwei Führungsklötze 11 fest verbunden. Die Führungsklötze 11 sind auf der Oberseite der Halteplatte 6, d. h. der dem abgewinkelten L-Schenkel 7 abgewandten Seite angeordnet. Sie besitzen in Verstellrichtung des Anschlags verlaufende, parallele Durchgangsbohrungen, die je eine der Führungsstangen 9 aufnehmen. Die Führungsklötze sind mit einer Gewindebohrung versehen, die die Durchgangsbohrung für die entsprechende Führungsstange 9 trifft. In der Gewindebohrung schraubt sich eine gegen die Führungsstange 9 arbeitende Klemmschraube 12 vor. Der Anschlag ist mit den beiden Führungsklötzen 11 auf die parallelen Führungsstangen 9 aufgezogen. Er kann nach einem Lösen der Klemmschrauben 12 auf den Führungsstangen 9 verstellt werden. Des weiteren besteht eine alternative oder zusätzliche Verstellmöglichkeit bei festgeklemmtem Anschlag durch Lösen der Knebel 10. Die Führungsklötze 11 befinden sich auf der dem L-Schenkel 7 bzw. Fräser 2 abgewandten Partie der Halteplatte 6. Sie sind in ihrer Höhe so dimensioniert, daß die Halteplatte 6 des Anschlags in geringem Abstand unterhalb von der Laufsohle 3 des Auflagetischs 1 zu liegen kommt. Es besteht daher die Möglichkeit, den Anschlag unter den Auflagetisch 1 zu fahren.

Bezugnehmend auf Fig. 2, hat die Halteplatte 6 des Anschlags im Bereich der Führungsklötze 11 einen rechteckigen Grundriß. Sie erweitert sich zu dem L-Schenkel 7 hin unter Bildung zweier seitlicher Flügel 13, die mit einer schrägen Hinterkante 14 in die rechteckige Partie der Halteplatte 6 übergehen. Die Anordnung der beiden Flügel 13 ist symmetrisch. Ihre seitlichen Außenkanten 15 verlaufen parallel zu den Führungsstangen 9 und ihre Vorderkanten 16 auf gleicher Höhe senkrecht dazu.
An den Vorderkanten 16, d. h. im Bereich maximaler Breite
der Halteplatte 6, ist unter rechtem Winkel der L-Schenkel
7 abgewinkelt.

Der L-Schenkel 7 wird durch eine Ausnehmung 17 unterbrochen und in zwei Abschnitte unterteilt. Die Ausnehmung
17 erstreckt sich nach Art eines Langlochs auch über
die Halteplatte 6, und zwar etwa bis auf die Höhe des
Flügelansatzes. Ihre rückwärtige Innenkante 18 ist kreisbogenförmig gekrümmt, und zu der Anschlagfläche 8 hin
ist die Ausnehmung 17 offen. Die Ausnehmung 17 kommt
mittig zwischen den Flügeln 13 zu liegen, die so in
gleicher Größe von der Halteplatte 6 abgeteilt werden.
Insbesondere sind die Führungsabschnitte der L-Schenkel
7 beidseits von der Ausnehmung 17 gleich groß. Bezüglich der rechteckigen Partie der Halteplatte 6 und relativ zu den Führungsklötzen 11 mit den Führungsstangen
9 liegt die Ausnehmung 17 außermittig. Diese Anordnung
entspricht der Form einer an dem Anschlag befestigten
Spänefanghaube 19, die nachstehend noch näher erläutert
wird.

Die Ausnehmung 17 ermöglicht es, den Anschlag so über
den Fräser 2 zu fahren, daß dieser im Innern der Ausnehmung 17 zu liegen kommt. Der Fräser 2 kann beispielsweise die in Fig. 2 angedeutete Position einnehmen,
in der er mit seiner Mantelfläche geringfügig über die
fluchtenden Anschlagflächen 8 der L-Schenkel 7 hinaussteht. Der Überstand bestimmt dann den Materialabtrag
des Werkstücks, an dem die Oberfräse mittels des Anschlags
entlanggeführt wird. Es versteht sich, daß man diesen
Materialabtrag durch Verstellen des Anschlags auf den
Führungsstangen 9 einstellen kann. Die Anordnung der
Führungsstangen 9 ist so gewählt, daß der Fräser 2 in
einer Mittelebene der Ausnehmung 17 zu liegen kommt, und die Breite der Ausnehmung 17 ist an den maximalen Fräserdurchmesser der Oberfräse angepaßt.

Die bereits erwähnte Spänefanghaube 19 ist an der Unterseite der Halteplatte 6 befestigt. Hierzu dienen zwei
abgekröpfte Laschen 20, deren Form sich am besten aus
Fig. 2 und Fig. 4 ergibt. Die Laschen 20 sind mit einem
ersten Schenkel 21 fest an die Halteplatte 6 montiert,
z. B. mit dieser verschraubt. Von dem ersten Schenkel
21 ist über die volle Länge der Laschen 20 ein Steg
22 abgewinkelt, und von diesem wiederum steht winklig
ein zweiter Schenkel 23 ab, der sich parallel und höhenversetzt zu dem ersten Schenkel 21 erstreckt. Die Laschen
20 sind in Längsrichtung der Führungsstangen 9 ausgerichtet. Sie befinden sich beidseits in ungleichem Abstand von der Ausnehmung 17 im Bereich je eines der
Flügel 13, und sie sind derart angebracht, daß ihre abgekröpften zweiten Schenkel 23 aufeinander zu gerichtet
sind. Zwischen diesen Schenkeln 23 und der Unterseite
der Halteplatte 6 besteht ein Zwischenraum, in den die
Spänefanghaube 19 mit Verschiebespiel eingesetzt werden
kann.

Die Spänefanghaube 19 wird von den Laschen 20 an einer
Grundplatte 24 gehalten. Auf die Grundplatte baut ein
nach unten abstehendes Gehäuse auf, das den Fräser 2
umschließt und die von dem Fräser 2 weggeschleuderten
Späne auffängt. Das Gehäuse hat eine Wand 25, die sich
mehr oder weniger in Umfangsrichtung des Fräsers 2 erstreckt. Sie umgibt den nicht arbeitswirksamen Mantelabschnitt des Fräsers 2, der in der Ausnehmung 17 des
Anschlags versenkt zu liegen kommt. Weiterhin hat das
Gehäuse einen Boden 26, der bei aufgeschobener Spänefanghaube unterhalb des Fräsers 2 zu liegen kommt. Ein Abschnitt 27 des Bodens 26 in der Nachbarschaft des Fräsers
2 ist eben. Von dem ebenen Bodenabschnitt 27 geht eine Rampe 28 ab, die nach oben und zu der Staubabsaugeinrichtung führt.

Bezugnehmend auf Fig. 2, ist die Spänefanghaube 19 im Bereich der Rampe 28 erweitert. Der Fräser 2 läuft außermittig in der Spänefanghaube 19. Seine Drehrichtung wird durch den Pfeil 29 angezeigt. Ein beliebig herausgegriffenes Mantelelement des Fräsers 2 tritt bei 30 in die Spänefanghaube 19 ein und bei 31 daraus aus. Die Gehäuseerweiterung mit der Rampe 28 befindet sich an der Austrittsseite 31 der Spänefanghaube 19. Die Rampe 28 steigt in Drehrichtung 29 des Fräsers 2 gesehen an (vgl. Fig. 3). Sie ist in dem dargestellten Ausführungsbeispiel eben und unter vorzugsweise ca. 45$^{\circ}$ geneigt. Man kann der Rampe 28 aber auch eine andere, in Drehrichtung ansteigende, z. B. gekrümmte oder gewölbte Kontur verleihen.

Die Spänefanghaube 19 arbeitet wie folgt. Nach Verlassen des zu fräsenden Werkstücks läuft ein Mantelelement des Fräsers 2 bei 30 in die Spänefanghaube 19 ein. Von dem Fräser 2 mitgenommene Späne, Staub usw. werden in Tangentialrichtung fortgeschleudert, wobei sie eine Umfangsgeschwindigkeitskomponente erhalten. Sie treffen auf die gekrümmte Wand 25 der Spänefanghaube, wo sie abgelenkt und in Umfangsrichtung weiterbefördert werden, bis sie die Rampe 28 erreichen. Dort erfahren die Späne eine weitere Ablenkung nach oben, die sie in den Saugstrom der Staubabsaugeinrichtung bringt. Die sich in der Spänefanghaube 19 sammelnden Späne, Staub- o. ä. Partikel werden so nahezu restlos aus der Spänefanghaube 19 abgesaugt.

Der Flugweg der Späne führt durch eine Durchtrittsöffnung 32 in dem Anschlag nach oben. Die Durchtrittsöffnung 32 ist oberhalb der Gehäuseerweiterung der Spänefanghaube 19 mit der Rampe 28 vorgesehen. Sie ist in einem der Flügel 13 des Anschlags ausgenommen, und zwar sowohl auf der Halteplatte ( vgl. Fig. 2) als auch auf dem entsprechenden L-Schenkel 7 (vgl.Fig. 4). Die Durchtrittsöffnung 32 hat im Bereich des Schenkels 7 einen rechteckigen Querschnitt. Anders als die Ausnehmung 17 nimmt sie nur einen Teil der Schenkeltiefe ein, was aus Stabilitätsgründen wünschenswert ist. Auf der Halteplatte 6 hat die Durchtrittsöffnung 32 eine dem Arbeitsbereich des Fräsers 2 zugewandte, gerade Vorderkante 33 und eine mit dieser spitz zusammenlaufende, gekrümmte Hinterkante 34. Die Hinterkante 34 folgt in ihrem Verlauf der Krümmung der Wand 25. Es wird so ein großer Durchtrittsquerschnitt für die auf der Rampe 28 abgelenkten Späne erzielt.

Wesentlich für die Funktion der erfindungsgemäßen Spänefanghaube 19 ist eine sich mehr oder weniger in Umfangsrichtung des Fräsers 2 erstreckende erste Ablenkfläche, die die Späne auf eine nach oben geneigte zweite Ablenkfläche führt. Bildet man die letztere als ebene Rampe 28 aus, so empfiehlt sich ein Anstellwinkel von $45^{\circ}$, damit im Spanflug eine Ablenkung von $90^{\circ}$ erzielt wird. Wie bereits erwähnt, kann die zweite Ablenkfläche aber auch ein gekrümmtes oder gewölbtes Profil haben.

Der ebene Boden 26 der Spänefanghaube 19 hat keine spanablenkende Funktion. Er bildet einen auf die maximale Frästiefe abgestimmten Abschluß der Spänefanghaube 19 nach unten, wobei er den Vorteil einer leichten Reinigungsmöglichkeit bietet. Die erfindungsgemäße Spänefanghaube 19 baut überdies sehr klein. Doch steht im Prinzip nichts entgegen, das Gehäuse der Spänefanghaube 19 über seine volle Grundfläche mit einem geneigten Boden zu versehen (nicht dargestellt).

Die Grundplatte 24 der Spänefanghaube 19 bildet beidseits von ihrem Gehäuse zwei schmale Randstege 35, die zwischen den abgekröpften Laschen 20 geführt sind. Hinter dem Gehäuse verschmälert sich die Grundplatte 24 beidseits in je einer Stufe mit schrägem Kantenverlauf. Auf den entsprechenden Grundplattenabschnitt baut hinter dem Gehäuse ein als Handgriff dienender Aufsatz 36 auf, der mit dem Gehäuse nicht in Verbindung steht, keine Spanleitwirkung hat und für die Funktion der Spänefanghaube 19 gänzlich außer Betracht bleiben kann.

Das Gehäuse der Spänefanghaube 19 setzt an einem vorderen Rand 37 der Grundplatte 24 an. Seine gekrümmte Wand 25 beginnt und endet an diesem vorderen Rand 37, so daß sich die Spänefanghaube 19 zu dem vorderen Rand 37 hin öffnet. Der von der Wand 25 umschlossene Innenbereich der Spänefanghaube 19 ist auf der Höhe der Grundplatte 24 offen. Der Fräser 2 kann so von oben her frei in das Gehäuse eingreifen, und der in der Nachbarschaft des Fräsers 2 wirkende Saugstrom kann Späne auch unmittelbar nach oben fördern. Die Späne treten dann durch die Ausnehmung des Anschlags 14.

Die Spänefanghaube 19 läßt sich in Längsrichtung der Führungsstangen 9, d. h. quer zu der Fräserachse verstellen. Zunächst einmal wird die Spänefanghaube 19 mitgenommen, wenn man den ganzen Anschlag an den Führungsstangen 9 verschiebt, um eine Anpassung an eine neue Fräsergröße vorzunehmen oder den Spanabtrag des Fräsers an dem zu bearbeitenden Werkstück zu verändern. Darüber hinaus ist die Spänefanghaube 19 auch in den Laschen 20 relativ zu dem Anschlag verschieblich aufgenommen, wobei das Bewegungsspiel auf den Fräser 2 hin durch eine Anschlagstellung an den L-Schenkeln 7 begrenzt ist. Man kann so die Spänefanghaube 19 relativ zu dem Anschlag justieren und eine Position aussuchen, in der eine optimale Spanableitung und -absaugung erfolgt. Weiterhin läßt sich die Spänefanghaube 19 leicht von dem Anschlag abbauen und reinigen.

Die erfindungsgemäße Spänefanghaube 19 muß nicht notwendigerweise mit einem Anschlag kombiniert werden. Sie kann vielmehr auch für sich allein an dem Auflagetisch 1 der Oberfräse gehaltert und verschieblich geführt sein.

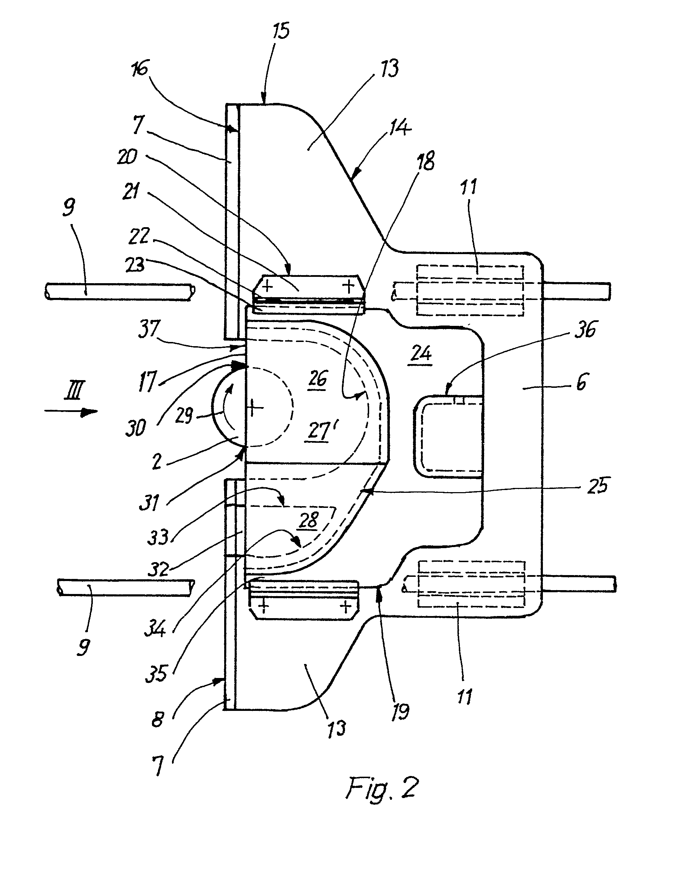

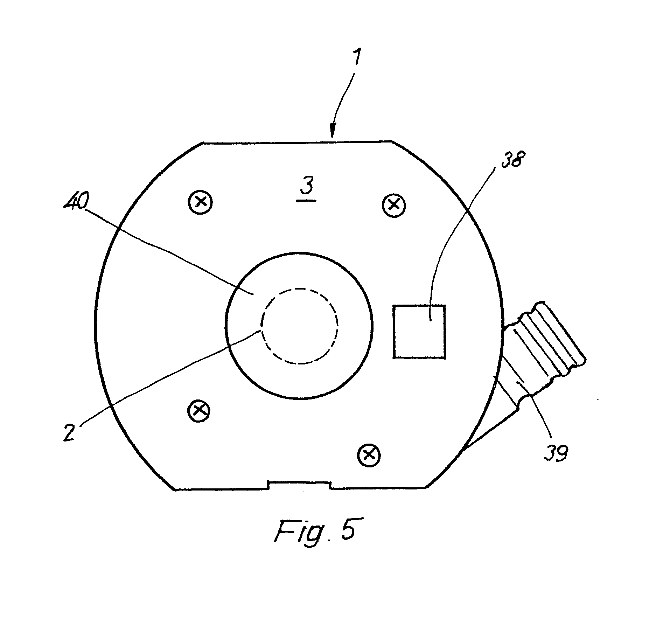

Bildet man den Auflagetisch 1 als Hohlkörper aus, durch den die Staubabsaugung erfolgt, so kann man eine Öffnung 38 in der Laufsohle 3 vorsehen, die in üblichen Arbeitsstellungen von Anschlag und Spänefanghaube 19 mit der Rampe 28 auf gleicher Höhe liegt und mit der Durchtrittsöffnung 32 in dem Anschlag fluchtet (vgl. Fig. 5). Die abzusaugenden Späne treten durch diese Öffnung 38 in den Auflagetisch 1 ein, und sie werden durch den Hohlraum des Auflagetischs 1 zu dem Absaugstutzen 39 hin geleitet. Fig. 5 zeigt die Durchbrechung 40 in dem Auflagetisch 1, durch die der Fräser 2 hindurchgreift. Wie bereits erwähnt, ist der Auflagetisch 1 im Bereich des Durchbruchs 40 zu dem Fräser 2 hin auf wenigstens einem Teil seines Umfanges offen, so daß der Saugstrom den Fräser 2 auch seitlich erreicht.

Schließlich sei noch angemerkt, daß die Oberfräse auch in der in Fig. 1 gezeigten Stellung des Anschlags betrieben werden kann, bei der sich die Spänefanghaube in weitem Abstand von dem Fräser 2 befindet und letzteren nicht umschließt. Die Spänefanghaube ist dann allerdings weitgehend außer Funktion.

Patentansprüche

1. Oberfräse mit einem Auflagetisch (1), der einen den Durchgriff eines Fräsers (2) ermöglichenden Durchbruch besitzt, mit einer auf der Höhe des Auflagetischs (1) oder oberhalb davon arbeitenden Staubabsaugeinrichtung und mit einem Spänefang, dadurch gekennzeichnet, daß der Spänefang eine unterhalb des Auflagetisches (1) befindliche Haube (19) ist, die den Fräser (2) mit einer sich mehr oder weniger in Umfangsrichtung erstreckenden Wand (25) über einen Teil seines Umfanges umschließt und einen unterhalb des Fräsers (2) zu liegen kommenden Boden (26) besitzt, der eine zu der Staubabsaugeinrichtung führende Rampe (28) bildet.

2. Oberfräse nach Anspruch 1, dadurch gekennzeichnet, daß die Rampe (28) eben oder gewölbt und gegen die Fräserachse derart geneigt ist, daß sie in Wurfrichtung der Späne ansteigt.

3. Oberfräse nach Anspruch 1 oder 2, dadurch gekennzeichnet, daß die Wand (25) am Rand (37) einer Grundplatte (24) ansetzt, so daß sich die Spänefanghaube (19) zu diesem Rand (37) hin öffnet, und daß der von der Wand (25) eingeschlossene Bereich der Spänefanghaube (19) auf der Höhe der Grundplatte (24) offen ist.

4. Oberfräse nach einem der Ansprüche 1 bis 3, dadurch gekennzeichnet, daß die Spänefanghaube (19) quer zu der Fräserachse verstellbar an dem Auflagetisch (1) gehaltert ist.

5. Oberfräse nach Anspruch 4, dadurch gekennzeichnet, daß die Spänefanghaube (19) an einem Anschlag der Oberfräse befestigt ist, dessen Abstand von dem Fräser (2) verstellbar ist.

6. Oberfräse nach Anspruch 5, dadurch gekennzeichnet, daß die Spänefanghaube (19) an dem Anschlag verschieblich geführt ist.

7. Oberfräse nach Anspruch 5 oder 6, dadurch gekennzeichnet, daß der Anschlag ein L-Profil mit einer sich parallel zu dem Auflagetisch (1) erstreckenden Halteplatte (6) und einem davon abgewinkelten, eine Anschlagfläche (8) bildenden L-Schenkel (7) ist, daß die Grundplatte (24) der Spänefanghaube (19) an der Unterseite der Halteplatte (6) zu liegen kommt und dort beispielsweise mit Verschiebespiel zwischen zwei Laschen (20) aufgenommen ist, und daß der Anschlag im Bereich der Spänefanghaube (19) für einen Eingriff des Fräsers (2) aufgebrochen ist, wobei insbesondere der L-Schenkel (7) unterbrochen und die Halteplatte (6) mit einer zur Seite hin offenen Ausnehmung (17) versehen sein kann.

8. Oberfräse nach einem der Ansprüche 5 bis 7, dadurch gekennzeichnet, daß der Anschlag eine oberhalb der Rampe (28) befindliche Durchtrittsöffnung (32) für abzusaugende Späne besitzt.

9. Oberfräse nach Anspruch 8, dadurch gekennzeichnet, daß die Durchtrittsöffnung (32) auf der Halteplatte (6) und auf dem L-Schenkel (7) des Anschlags ausgenommen ist, wobei sie einen Teil der Schenkeltiefe einnimmt.

10. Oberfräse nach Anspruch 8 oder 9, dadurch gekennzeichnet, daß die Durchtrittsöffnung (32) eine dem Arbeitsbereich des Fräsers (2) zugewandte, gerade Vorderkante (33) und eine gekrümmte, der Wand (25) der Spänefanghaube (19) entsprechend verlaufende Hinterkante (34) hat.

Fig. 1

Fig. 3

Fig. 4

Fig. 2

Fig. 5